# EUROPEAN PATENT APPLICATION

(11) **EP 2 787 487 A1**
(43) Date of publication of application: **08.10.2014**
(21) Application number: 13180932.9
(22) Date of filing: 19.08.2013
(51) Int. Cl.: G06T 15/00

(54) **Method of object customization by high-speed and realistic 3D rendering through web pages**

(30) Priority: 02.04.2013 CN 201310113082
(71) Applicant: Bi, Sheng, Chaoyang District Beijing 100016 (CN)
(72) Inventor: Bi, Sheng, Beijing 100016 (CN)
(74) Representative: Faggioni, Carlo Maria

(57) **Abstract**

The present invention provides a method of object customization by high-speed and realistic 3D rendering through web pages, comprising: generating a 3D model of an object with a three dimensional modeling tool, and outputting the 3D model to a 3D model file; loading the 3D model file into system, preprocessing the 3D model file and generating a binary snapshot file of the 3D model file; while the rendering is triggered, loading the binary snapshot file, color-separated rendering various parts of the 3D model of the object, and saving the data of color-separated rendering in mask images with a 3D rendering engine; recalculating material specifications and material extensibility according to the positions of the target areas selected by users on the 3D model; displaying the materials of the target selected by users on the target areas according to the material specifications and material extensibility, and displaying the effect pictures of the 3D model of the object after rendering on web pages. This method can achieve high-speed rendering of the 3D model and displaying the model realistically.

## Description

### FILED OF THE INVENTION

The present invention relates to 3D rendering field, and in particular, to a method of object customization by high-speed and realistic 3D rendering through web pages.

### BACKGROUND OF THE INVENTION

In traditional electronic business, goods are purchased or designed independently, bulk produced, and sold to customers through internet platform. With the improvement of living standards, user demands for personalized customization of goods are increasing. These demands are difficult to be satisfied in traditional lines, and the development of the electric business makes it possible.

At present, in the electronic business practice on intornat, there are already many kinds of on-line customized solutions of goods, allowing the customers to customize the materials of various parts of the goods, and providing the functions of 3D displaying, and the customers can see the final effect of the goods from different angles prior to receiving the goods. However, while customizing the materials of various parts of the goods, as it is necessary to assign the materials of various parts at the time of creating a 3D model, that is to say, it is necessary to realize the replacement of the materials in a 3D modeling tool, so as to ensure the proportions and angels between the materials and the 3D model satisfy the requirements of rendering to achieve displaying realistically, thus it is necessary to modify the model or create a new model with a 3D modeling tool in case of replacing the materials and achieve displaying realistically, so that the time of replacing the materials and displaying realistically to users is long.

In addition, in the existing on-line customized solutions of goods concerning 3D rendering, original 3D model file comprises all the spatial geometric data. It is necessary to analyze and reconstruct these data each time in traditional rendering method, resulting in low efficiency. Normally, it costs more than 5 minutes to do the rendering with one engine. Thus, the demand for real-time performance of foreground can not be satisfied at all.

The reason for the low efficiency of the 3D rendering in these solutions is that the 3D model takes the format of OBJ that having high versatility, to exchange with other systems conveniently. The feature of this format is saving three dimensional data in text mode, with advantage of high versatility, and with disadvantage of low processing speed. The size of a high-precision OBJ file of three dimensional model having a million triangles is generally about 150M. It needs to consume CPU and IO time a lot to load and process these text files. According to estimates, it needs more than 10 seconds to read and load an OBJ file the size of which is 150M. Obviously, the requirements of on-line customizations can not be satisfied. Therefore, the problem has to be solved, if there is a demand for a quick response to customization request from a user.

The information disclosed in this Background of the Intention section is only for enhancement of understanding of the general background of the invention and should not be taken as an acknowledgement or any form of suggestion that this information forms the prior art already known to a person skilled in the art.

### SUMMARY OF THE INVENTION

In consideration of above drawbacks in the prior art, the present invention provides a method of object customization by high-speed and realistic 3D rendering through web pages.

The present invention provides a method of object customization by high-speed and realistic 3D rendering through web pages, comprising: generating a 3D model of an object with a three dimensional modeling tool, and outputting the 3D model to a 3D model file; loading the 3D model file into system, preprocessing the 3D model file and generating a binary snapshot file of the 3D model file; while the rendering is triggered, loading the binary snapshot file, color-separated rendering various parts of the 3D model oaf the object, and saving the data of color-separated rendering in mask images with a 3D rendering engine; recalculating material specifications and material extensibility according to the positions of the target areas selected by users on the 3D model; displaying the materials of the target selected by users on the target areas according to the material specifications and material extensibility, and displaying the effect pictures of the 3D model of the object after rendering on web pages.

A method of object customization by high-speed and realistic 3D rendering through web pages as above, wherein, generating the binary snapshot file in the following way: applying for a memory space with the same size as the 3D model file, analyzing three dimensional data in the 3D model file and generating data in binary format that can be used for rendering and can be used directly by the 3D rendering engine, as well as recopying the data in binary format into the space successively according to the preset sequence and modifying the offset distances of the pointers accordingly.

A method of object customization by high-speed and realistic 3D rendering through web pages as above, wherein, the binary snapshot file is in the form of binary stream compressed in lzo format.

A method of object customization by high-speed and realistic 3D rendering through web pages as above, wherein, the 3D model file is in the format of OBJ.

A method of object customization by high-speed and realistic 3D rendering through web pages as above, wherein, the data format used in the file of OBJ format are 16-bit unsigned integers.

A method of object customization by high-speed and realistic 3D rendering through web pages as above, wherein, the 3D rendering can be triggered through web pages.

A method of object customization by high-speed and realistic 3D rendering through web pages as above, wherein, the three dimensional, modeling tool is 3DMAX or MAYA.

A method of object customization by high-speed and realistic 3D rendering through web pages as above, wherein, displaying the effect pictures of the 3D model of the object after rendering through JavaScript technology.

A method of object customization by high-speed and realistic 3D rendering through web pages as above, wherein, the effect pictures are many pictures of the 3D model of the object from different angles.

A method of object customization by high-speed and realistic 3D rendering through web pages as above, wherein, while operating the pages, displaying the many pictures successively through mouse wheel to achieve the effect of three dimensional displaying.

A method of object customization by high-speed and realistic 3D rendering through web pages of the present invention, generating the binary snapshot file of the 3D model file by preprocessing the 3D model file loaded into the system, so that it is not necessary to analyze the 3D model file reloaded again while doing another rendering, unless the 3D model is modified so that the rendering time is reduced to 2 seconds. Furthermore, recalculating material specifications and material extensibility according to positions of target areas selected by users on the 3D model, and displaying the materials of the target selected by users on target areas according to material specifications and material extensibility, so as to achieve the following effects: while users replacing the materials, only need to select the target areas and the materials of the target. The system according to the present invention can achieve displaying the materials in various parts of the goods realistically without modifying the model or creating a new model, resulting in reducing a lot of work, reducing the burden of the system, and saving the time of users at the same time.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

The present invention have other features and advantages which will be apparent from or are set forth in more detail in the accompanying drawings, which are incorporated herein, and the following Detailed Description, which together serve to explain certain principles of the present invention.
FIG. 1 is a flowchart of a method of object customization by high-speed and realistic 3D rendering through web pages of the present invention.
FIG. 2a, FIG. 2b, FIG. 2c, FIG. 2d, FIG. 2e, FIG. 2f, and FIG. 2g are exemplary figures of saving the data of color-separated rendering in mask images, and the examples are various parts of shoes.
FIG. 3a, FIG. 3b, and FIG. 3c are effect pictures of rendering some objects using the method of the present invention.

It should be understood that the appended drawings are not necessarily to scale, presenting a somewhat simplified representation of various features illustrative of the basic principles of the invention. The specific design features of the present invention as disclosed herein, including, for examples, specific dimensions, orientations, locations, and shapes will be determined in part by the particular intended application and use environment.

### DETAILED DESCRIPTION OF THE INVENTION

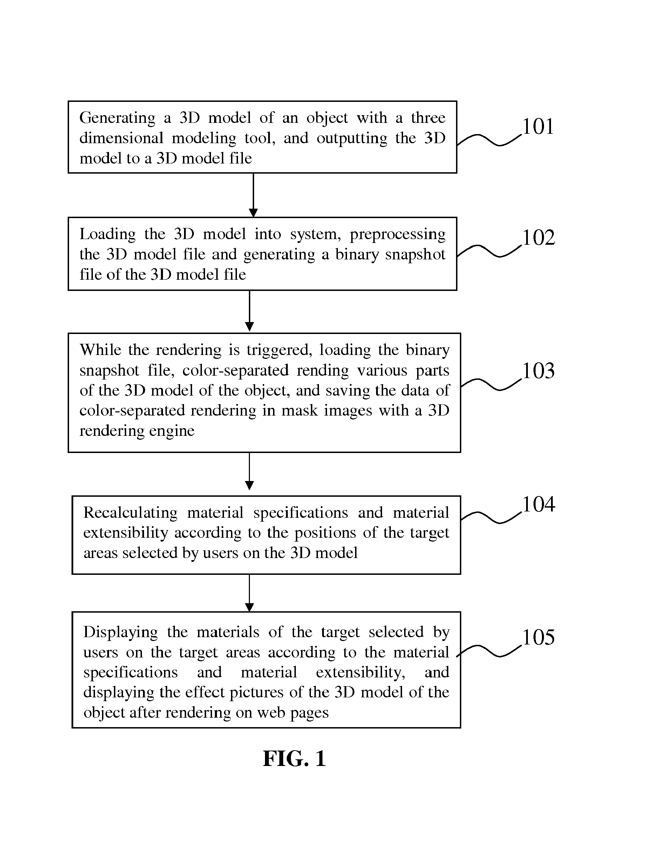

Please refer to Fig. 1, and FIG. 1 is a flowchart of a method of object customizations by high-speed and realistic 3D rendering through web pages of the present invention. The present invention provides a method of object customization by high-speed and realistic 3D rendering through web pages, wherein, users select various parts of the object in server through web pages to customize the object. Hereinafter, the steps of this method will be described in detail.

In step 101, generating a three dimensional model of an object with a three dimensional modeling tool, and outputting the model to a 3D model file. Said 3D model file comprises all the spatial geometric data. In the present exemplary embodiment, the 3D model takes the format of OBJ that having high versatility (hereinafter, all take OBJ format as example). The file of this format comprises three dimensional geometric data of this model, and the geometric data comprise tens of thousands to millions of triangles constituted of points and lines. Preferably, said three dimensional modeling tool is 3DMAX or MAYA software.

The description of length in the existing OBJ file takes the format of 32-bit unsigned integer, expressing the range from 0 to 2³²-1, and it is sufficient to describe an object with the length of the side of 40 thousand kilometers. However, for the requirements of most on-line customization of goods, the biggest object need to be described is just in the type of furniture. Thus, this is improved by the present invention. In an exemplary embodiment of the present invention, the data are reduced to 16-bit unsigned integers. Consequently, the maximum length of the object can be described is 65 meters, sufficient to satisfy the most requirements of on-line customizations of goods. This action reduces the size of disk file by about 40% according to estimates.

In step 102, loading the OBJ model into the system, preprocessing the 3D model file and generating a binary snapshot file of said 3D model file.

In an exemplary embodiment, the algorithm generating the snapshot file is: applying for a memory space with the same size as original OBJ file, analyzing three dimensional data in the OBJ file and generating data in binary format that can be used for rendering and can be used directly by 3D rendering engine, as well as recopying the data in binary format into the space successively according to the preset sequence and modifying the offset distances of the pointers accordingly. After the OBJ file is loaded completely and the data of it are analyzed, all the obtained binary data after loading are saved into disk file, that is to say, the binary snapshot file is generated. This progress is required to perform only one time, and there is no further demand for files of OBJ format in the rendering later, unless modifying the model itself. Thus the speed of the rendering can be improved.

To improve the speed of loading, the malloc mechanism provided by the system is not adopted by the present invention, instead, the invention creates a memory management module by itself. This module saves the binary data of the same model into a piece of memory successively. It is not necessary to further analyze the binary snapshot file while reading it, the binary snapshot file can be read into assigned positions in memory directly. It is not necessary to reanalyze the binary file in this process, and there is only simple IO operation, thus good performance may be obtained.

Furthermore, in consideration that read/write performance of the disk IO is two orders slower than that of the memory, the present invention further adopts lzo compression mechanism to save files, that is to say, the binary snapshot file may be in the form of binary stream compressed in lzo format. This further reduces the size of the file by more than 70%. Since adopting this mechanism, the size of OBJ file is reduced by more than 80%, for example, OJB file the size of which is 150M originally is converted into a snapshot file the size of which is about 20M, and the loading performance is also improved, from 10 seconds to within 1 second.

In step 103, while the rendering is triggered, the 3D rendering engine loads said binary snapshot file, color-separated renders various parts of the 3D model of the object, and saves the data of color-separated rendering in mask images.

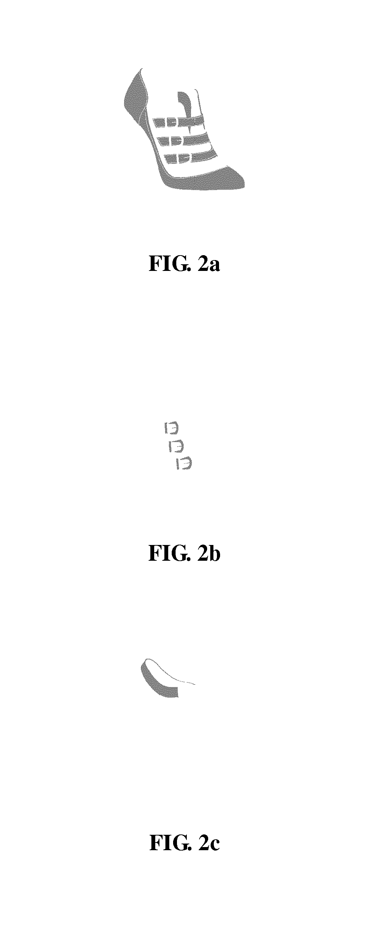

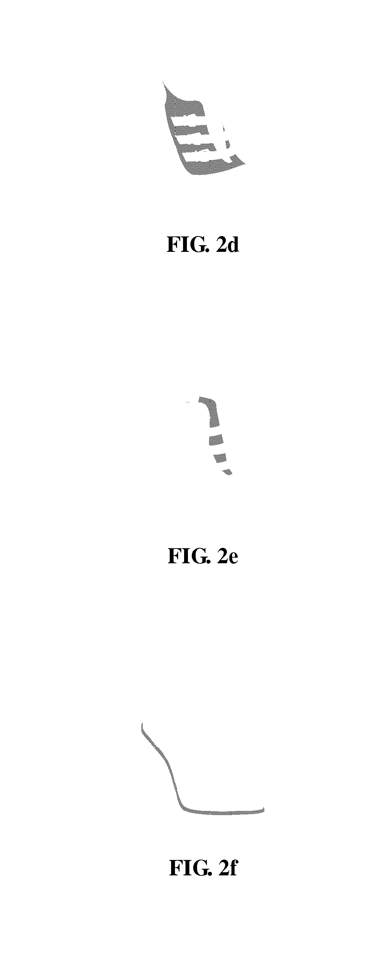

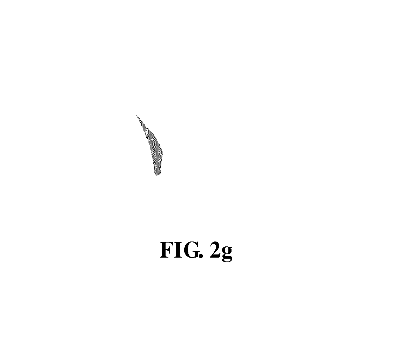

Color-separated rendering means making various parts of the object display various colors, in particular, making the target area display a color, and other parts display transparent color. FIG. 2a, FIG. 2b, FIG. 2c, FIG. 2d, FIG. 2e, FIG. 2f, and FIG. 2g are exemplary figures of saving the data of color-separated rendering in mask images, such as shoes, and the examples are various parts of the shoes.

In step 104, recalculating material specifications and material extensibility according to positions of the target areas selected by users on the 3D model.

Users may select the target areas through sliding a mouse on the 3D model. Using the system according to the method of the present invention, according to the coordinates of positions selected though sliding the mouse on the 3D model, the mask images corresponding to said coordinates are determined, to overlay the 3D model with said mask images, thereby the target areas are displayed to users for selection.

In step 105, displaying the materials of the target selected by users on the target areas according to material specifications and material extensibility, and displaying the effect pictures of the 3D model of the object after rendering on web pages.

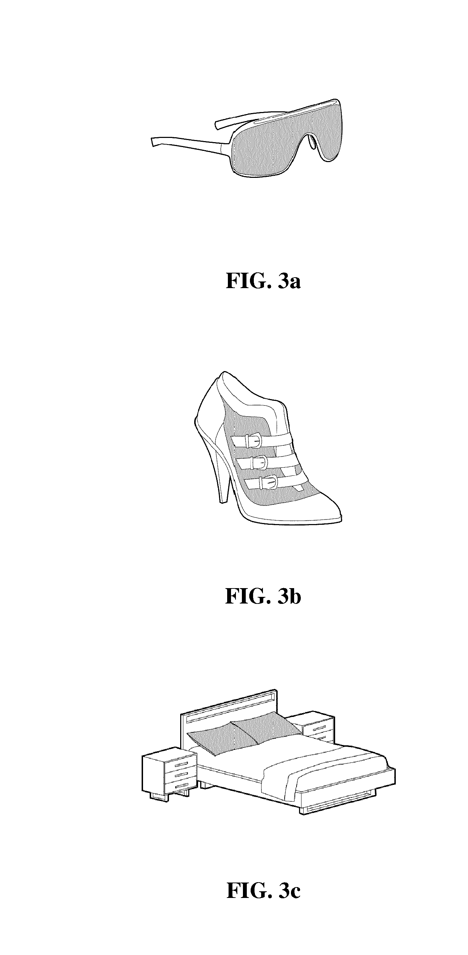

The 3D rendering may be triggered through web pages. The existing rendering engine may be adopted to color-separated render the object. The rendering process is as followed: First, the front-end sends the rendering request to the rendering engine through network. The rendering engine reads and loads the binary snapshot file need to be rendered according to the rendering request. Meanwhile, picture files of the materials required for rendering are also loaded. After the loading is completed, the engine sets a position for camera first, and then analyzes the image of every point in the three dimensional model generated after it reflecting light, and recalculates material specifications and material extensibility according to the positions of target areas selected by users on the 3D model, finatly, an effect picture of the rendering is combined. FIG. 3a, FIG. 3b, and FIG. 3c are effect pictures of rendering some objects using the method of the present invention. The objects shown in FIG. 3a, FIG. 3b, and FIG. 3c include glassed, shoes and beds.

In the present exemplary embodiment, the effect pictures of the model of the object may be displayed on web pages through Javascript technology. Said effect pictures are many pictures of the model of the object from different angles. Take eight pictures from eight angles as example, the eight pictures are displayed successively through mouse wheel while users operating the pages, to achieve the effect of three dimensional displaying.

In the present invention, after the 3D model file is loaded, the data in binary format are directly saved into image file through continuous memory allocation technology. It is not necessary to reanalyze the binary file reloaded; instead, it is used directly. The intermediate data are saved in maximum limit in this format, voiding the process of reconstructing model in memory each time.

Meanwhile, in the method of the present invention, recalculating material specifications and material extensibility according to the positions of target areas selected by users on 3D model, and displaying the materials of the target selected by users on target areas according to material specifications and material extensibility, so as to achieve the following effects: users only need to select the target areas and the materials of the target. The system according to the 3D rendering method of the present invention can achieve displaying the materials in various parts of the goods realistically without modifying the model or create a new model, resulting in reducing a lot of work, reducing the burden of the system, and saving the time of users at the same time.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents..

## Claims

1. A method of object customization by high-speed and realistic 3D rendering through web pages, comprising:
generating a 3D model of an object with a three dimensional modeling tool, and outputting the 3D model to a 3D model file;
loading the 3D model file into system, preprocessing the 3D model file and generating a binary snapshot file of the 3D model file;
while the rendering is triggered, loading the binary snapshot file, color-separated rendering various parts of the 3D model of the object, and saving the data of color-separated rendering in mask images by a 3D rendering engine;
recalculating material specifications and material extensibility according to the positions of the target areas selected by users on the 3D model;
displaying the materials of the target selected by users on the target areas according to the material specifications and material extensibility, and displaying the effect pictures of the 3D model of the object after rendering on web pages.

2. The method of object customization by high-speed and realistic 3D rendering through web pages according to claim 1, **characterized in that**, generating the binary snapshot file in the following way: applying for a memory space with the same size as the 3D model file, analyzing three dimensional data in the 3D model file and generating data in binary format that can be used for rendering and can be used directly by the 3D rendering engine, as well as recopying the data in binary format into the space successively according to the preset sequence and modifying the offset distances of the pointers accordingly.

3. The method of object customization by high-speed and realistic 3D rendering through web pages according to claim 1, **characterized in that**, the binary snapshot file is in the form of binary stream compressed in lzo format.

4. The method of object customization by high-speed and realistic 3D rendering through web pages according to any of claims 1 to 3, **characterized in that**, the 3D model file is in the format of OBJ.

5. The method of object customization by high-speed and realistic 3D rendering through web pages according to claim 4, **characterized in that**, the data format used in the file of OBJ format are 16-bit unsigned integers.

6. The method of object customization by high-speed and realistic 3D rendering through web pages according to claim 1, **characterized in that**, the 3D rendering can be triggered through web pages.

7. The method of object customization by high-speed and realistic 3D rendering through web pages according to claim 1, **characterized in that**, the three dimensional modeling tool is 3DMAX or MAYA.

8. The method of object customization by high-speed and realistic 3D rendering through web pages according to claim 1, **characterized in that**, displaying the effect pictures of the object after rendering through Javascript technology.

9. The method of object customizations by high-speed and realistic 3D rendering through web pages according to claim 1, **characterized in that**, the effect pictures are pictures of the 3D model of the object from different angles.

10. The method of object customization by high-speed and realistic 3D rendering through web pages according to claim 9, **characterized in that**, while operating the pages, displaying the many pictures successively though mouse wheel to achieve the effect of three dimensional displaying.
